(19) Europäisches Patentamt / European Patent Office / Office européen des brevets

(11) **EP 3 203 445 B1**

(12) **FASCICULE DE BREVET EUROPEEN**

(45) Date de publication et mention
de la délivrance du brevet:
**01.08.2018 Bulletin 2018/31**

(51) Int Cl.:
***G07C 5/00*** *(2006.01)*  ***H04L 12/40*** *(2006.01)*
***G06F 17/30*** *(2006.01)*

(21) Numéro de dépôt: **17153136.1**

(22) Date de dépôt: **25.01.2017**

(54) **SYSTEME ET PROCEDE D'IDENTIFICATION AUTOMATIQUE D'UN MODELE DE VEHICULE**

SYSTEM UND VERFAHREN ZUR AUTOMATISCHEN IDENTIFIEZIRUNG EINES FAHRZEURGSMODELLS

SYSTEM AND METHOD FOR AUTOMATICALLY IDENTIFYING A VEHICLE TYPE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.02.2016 FR 1650825**

(43) Date de publication de la demande:
**09.08.2017 Bulletin 2017/32**

(73) Titulaire: **ELIOCITY
59520 Marquette-lez Lille (FR)**

(72) Inventeurs:
• **OULMANE, Camille
59700 Marcq en Baroeul (FR)**
• **DUBOIS, Benjamin
59110 La Madeleine (FR)**

(74) Mandataire: **Novagraaf Technologies
Bâtiment O2
2, rue Sarah Bernhardt
CS90017
92665 Asnières-sur-Seine Cedex (FR)**

(56) Documents cités:
WO-A1-2011/147893   WO-A1-2013/063232
WO-A1-2016/116978   US-A1- 2014 188 328

## Description

### DOMAINE TECHNIQUE DE L'INVENTION

La présente invention concerne de manière générale le domaine de l'identification automatique d'un modèle de véhicule.

La présente invention concerne plus particulièrement un système et un procédé d'identification automatique d'un modèle de véhicule, le système comportant un dispositif électronique adapté pour être agencé au sein du véhicule et étant propre à être relié à au moins un réseau du véhicule. De tels dispositifs électroniques permettent par exemple d'interfacer et d'échanger des données avec le réseau du véhicule, typiquement pour remonter vers un serveur distant des données relatives au véhicule, telles que par exemple des paramètres physiques liés au véhicule.

### ETAT DE LA TECHNIQUE ANTERIEURE

Il est connu des systèmes d'identification automatique d'un modèle de véhicule.

Par exemple, certains systèmes sont basés sur des bases de données contenant des numéros de plaque d'immatriculation et/ou des identifiants de noms de propriétaires de véhicules, auxquels sont associés des modèles de véhicules. A partir de ces bases de données mises à disposition par exemple par des fournisseurs de service, de tels systèmes permettent l'identification automatique du modèle du véhicule, en récupérant au préalable l'information du numéro de plaque ou du nom du propriétaire. Toutefois, ces bases de données sont limitées en nombre de références, d'autant plus qu'elles sont en général alimentées par les services compétents d'un Etat donné, et qu'il n'existe pas de service continental ou mondial analogue qui fournirait les informations d'un véhicule à partir de sa plaque d'immatriculation, quel que soit son pays d'origine.

Par conséquent, un tel système est limité quant à son utilisation et présente un nombre de véhicules identifiables relativement faible comparé au nombre de véhicules total du parc. Par ailleurs, l'information du numéro de plaque d'immatriculation ou du nom du propriétaire n'est pas forcément aisée à récupérer, sans intervention d'un utilisateur.

Il est également connu des systèmes d'identification automatique d'un modèle de véhicule, qui comprennent un dispositif électronique adapté pour être agencé au sein du véhicule et propre à être relié à un réseau du véhicule.

Par exemple, il est connu un système comprenant un dispositif électronique agencé au sein du véhicule et relié à un réseau du véhicule, via une connexion filaire à un connecteur diagnostic embarqué à bord OBD (de l'anglais On-Board Diagnostic). Le dispositif électronique est adapté pour obtenir, via le réseau du véhicule, un paramètre VIN (de l'anglais Vehicle Identifier Number) stocké dans le calculateur de bord du véhicule. Ce numéro d'identification VIN est un code alphanumérique unique qui est donné à chaque véhicule automobile, et sa récupération par le dispositif électronique permet ainsi une identification automatique du modèle de véhicule. Le document WO 2013/063232 décrit un tel dispositif utilisant le paramètre VIN.

Toutefois, ce paramètre VIN peut être erroné pour certains modèles de véhicules, ce qui entraine un défaut de fiabilité dans le procédé d'identification. Par ailleurs, ce paramètre VIN n'est accessible que via un protocole d'acquisition de données particulier, qui n'est pas largement diffusé. Ceci pose ainsi un problème d'accessibilité à ce paramètre pour certains modèles de véhicules.

### EXPOSE DE L'INVENTION

L'invention décrite par la suite vise à remédier à tout ou partie des inconvénients de l'état de la technique et notamment à proposer un système d'identification automatique d'un modèle de véhicule compatible avec un grand nombre de véhicules du parc existant, tout en présentant une précision d'identification et une fiabilité améliorées.

A cet effet, l'invention a pour objet un système d'identification automatique d'un modèle de véhicule, le véhicule comprenant une ou plusieurs unité(s) de commande électronique connectées les unes aux autres via au moins un réseau du véhicule, le système comportant un dispositif électronique et un équipement de traitement de données, le dispositif électronique étant adapté pour être agencé au sein du véhicule et étant propre à être relié à au moins un réseau du véhicule,

- le dispositif électronique étant relié à l'équipement de traitement de données via un réseau de communication et comportant des moyens de communication sur le réseau de communication ; des moyens d'acquisition de données circulant sur le ou chaque réseau du véhicule, lesdites données comprenant des messages et des paramètres d'identification de messages ; et un module de traitement de données relié aux moyens de communication et aux moyens d'acquisition de données, le module de traitement de données étant propre à élaborer une requête de demande d'identification du modèle du véhicule, la requête comprenant au moins un paramètre d'identification d'un message circulant sur le ou un des réseau(x) du véhicule ;

- l'équipement de traitement de données comprenant des moyens de mémorisation et des moyens de traitement de données reliés aux moyens de mémorisation, les moyens de mémorisation stockant une table de correspondance entre une liste de paramètres d'identification de messages circulant dans des réseaux de véhicules et une liste de modèles de véhicules associés, les moyens de mémorisation stockant en outre une application, l'application étant propre, lorsqu'elle est mise en oeuvre par les moyens de traitement de données après réception d'une requête de demande d'identification du modèle du véhicule, à identifier dans la table de correspondance un modèle de véhicule correspondant ;

dans lequel l'application comporte des instructions de programme aptes à calculer, lorsque l'application est mise en oeuvre par les moyens de traitement de données, pour le ou chaque réseau du véhicule, un taux de similarité entre un échantillon formé des paramètres d'identification contenus dans la requête de demande d'identification et correspondant à ce réseau, et des échantillons formés chacun d'un ensemble de paramètres de la liste de paramètres de la table de correspondance, et à identifier le modèle de véhicule selon le résultat du calcul de taux de similarité.

Grâce au fait que le dispositif électronique, une fois agencé au sein d'un véhicule, est adapté pour acquérir et pour transmettre à l'équipement de traitement de données des messages et des paramètres d'identification de messages propres au modèle de ce véhicule particulier, le système d'identification selon l'invention est avantageusement compatible avec un grand nombre de véhicules du parc existant. En effet, tant que les informations de types paramètres d'identification de messages sont renseignées dans la table de correspondance pour ce modèle de véhicule, l'équipement de traitement de données pourra identifier le modèle du véhicule en question, après réception des paramètres d'identification de messages.

En outre, grâce au fait que l'application comporte des instructions de programme aptes à calculer un taux de similarité entre un échantillon formé des paramètres d'identification contenus dans la requête de demande d'identification et correspondant à ce réseau, et des échantillons formés chacun d'un ensemble de paramètres de la liste de paramètres de la table de correspondance, et à identifier le modèle du véhicule selon le résultat du calcul de taux de similarité, le nombre de faux positifs est avantageusement réduit, et la précision et la fiabilité de l'identification sont ainsi améliorées.

Selon un autre aspect, l'invention a également pour objet un procédé d'identification automatique d'un modèle de véhicule, le véhicule comprenant une ou plusieurs unité(s) de commande électronique connectées les unes aux autres via au moins un réseau du véhicule, le procédé étant mis en oeuvre par un système d'identification selon la revendication 1, le dispositif électronique étant agencé au sein du véhicule et étant relié à au moins un réseau du véhicule, le procédé comprenant les étapes suivantes :

- l'acquisition, par le dispositif électronique, de données circulant sur le ou chaque réseau du véhicule, lesdites données comprenant des messages et des paramètres d'identification de messages ;

- l'élaboration, par le dispositif électronique, d'une requête de demande d'identification du modèle du véhicule, la requête comprenant au moins un paramètre d'identification d'un message circulant sur le ou un des réseau(x) du véhicule,
- l'émission, par le dispositif électronique, sur le réseau de communication à destination de l'équipement de traitement de données, de la requête de demande d'identification du modèle du véhicule,
- la réception, par l'équipement de traitement de données, de la requête de demande d'identification du modèle du véhicule,
- le calcul, par l'application de l'équipement de traitement de données, pour le ou chaque réseau du véhicule, d'un taux de similarité entre un échantillon formé des paramètres d'identification contenus dans la requête de demande d'identification et correspondant à ce réseau, et des échantillons formés chacun d'un ensemble de paramètres de la liste de paramètres de la table de correspondance, et
- l'identification, par l'application de l'équipement de traitement de données dans la table de correspondance, du modèle du véhicule, selon le résultat du calcul de taux de similarité.

Selon une caractéristique technique particulière de l'invention, lors de l'étape de calcul d'un taux de similarité, l'application applique, pour le ou chaque réseau du véhicule, un coefficient de type Sorensen-Dice sur chaque ensemble formé d'un échantillon contenu dans la requête de demande d'identification et correspondant à ce réseau, et d'un échantillon de la table de correspondance.

Selon une caractéristique technique particulière de l'invention, l'équipement de traitement de données comprend en outre un moyen de stockage de tables de configuration de signaux relatifs à des modèles de véhicules, chaque table de configuration correspondant à un modèle de véhicule particulier, et le procédé comprend en outre une étape de téléchargement, par les moyens de traitement de données de l'équipement de traitement de données, depuis le moyen de stockage, de la table de configuration de signaux correspondant au modèle du véhicule identifié.

Selon un mode de réalisation particulier de l'invention, à l'issue de l'étape de calcul d'un taux de similarité, une sous-liste ordonnée de modèles de véhicules est obtenue, les modèles de véhicules de la sous-liste étant des modèles pour lesquels le taux de similarité calculé est supérieur à un taux prédéterminé, l'étape d'identification du modèle du véhicule étant effectuée sur la base de ladite sous-liste ordonnée de modèles de véhicules.

Selon des caractéristiques particulières de ce mode de réalisation particulier de l'invention, la requête de demande d'identification du modèle du véhicule comprend en outre au moins un message circulant sur le ou un des réseau(x) du véhicule, et le procédé comprend en outre une étape de détermination, par l'application de l'équipement de traitement de données, pour chaque modèle de véhicule de la sous-liste ordonnée de modèles de véhicules, d'un taux de signaux utiles contenus dans les messages du ou de chaque échantillon de la requête de demande d'identification, ledit taux de signaux utiles étant déterminé à partir de la table de configuration de signaux associée à ce modèle de véhicule, les signaux utiles étant les signaux contenus dans lesdits messages et figurant dans ladite table de configuration de signaux ; et une étape de calcul, par l'application de l'équipement de traitement de données, pour chaque modèle de véhicule de la sous-liste ordonnée de modèles de véhicules, d'une valeur moyenne entre le taux de similarité calculé, associé à ce modèle de véhicule, et le taux de signaux utiles associé à ce modèle de véhicule.

Ceci permet d'améliorer encore la précision et la fiabilité de l'identification.

Selon une autre caractéristique particulière de ce mode de réalisation particulier de l'invention, lors de l'étape d'identification du modèle du véhicule, le modèle identifié est le modèle présentant la valeur moyenne la plus élevée.

Avantageusement, le procédé comprend en outre une étape de transmission au dispositif électronique, par l'équipement de traitement de données sur le réseau de communication, de ladite table de configuration de signaux correspondant au modèle du véhicule identifié, et une étape de stockage de ladite table, par le dispositif électronique dans une mémoire du dispositif.

Ces caractéristiques permettent avantageusement de fournir une installation automatique, dans le dispositif électronique, de données permettant au dispositif de configurer l'analyse des signaux circulant au sein du ou de chaque réseau du véhicule. Cette installation automatique est effectuée suite à une identification préalable du modèle du véhicule selon le procédé tel que décrit ci-dessus. Via ce procédé d'identification et d'installation entièrement automatisé, le dispositif électronique agencé au sein d'un véhicule est ainsi à même de pouvoir interpréter correctement les signaux circulant au sein du réseau du véhicule auquel il est relié, et ce dès la première connexion du dispositif au réseau du véhicule.

Selon un mode de réalisation particulier de l'invention, lors de l'étape d'identification du modèle du véhicule, le modèle identifié est le modèle associé aux paramètres de la liste de paramètres qui présentent le taux de similarité le plus élevé.

Selon un autre aspect, l'invention a également pour objet un produit programme d'ordinateur téléchargeable depuis un réseau de communication et/ou enregistré dans une mémoire d'un équipement de traitement de données, ledit produit programme d'ordinateur comprenant des instructions de programme formant l'application du système d'identification tel que décrit ci-dessus, lesdites instructions de programme étant adaptées pour mettre en oeuvre les étapes de calcul et d'identification du procédé tel que décrit ci-dessus lorsque le produit programme est exécuté dans l'équipement de traitement de données du système d'identification.

## BREVE DESCRIPTION DES FIGURES

D'autres caractéristiques et avantages de l'invention ressortiront à la lecture de la description qui suit, donnée uniquement à titre d'exemple, et faite en référence à :

- la figure 1 est une représentation schématique d'un système d'identification automatique d'un modèle de véhicule selon l'invention ;

- la figure 2 est une représentation schématique du système de la figure 1 selon un mode de réalisation particulier de l'invention ;

- la figure 3 est un organigramme représentant un procédé d'identification automatique d'un modèle de véhicule selon l'invention, mis en oeuvre par le système de la figure 1.

## DESCRIPTION DETAILLEE D'UN MODE DE REALISATION

Dans la suite de la description, on entend par « dispositif électronique agencé au sein d'un véhicule et propre à être relié à au moins un réseau du véhicule » tout dispositif électronique relié par voie filaire ou non filaire à au moins un réseau du véhicule, et agencé dans le véhicule ; tel que par exemple un boîtier télématique, un appareil de télécommunication sans fil tel qu'un téléphone cellulaire ou un smartphone, un système de navigation cellulaire, un ordinateur portable ou encore une tablette numérique, sans que cette liste ne soit exhaustive.

On entend également par « micrologiciel » un ensemble d'instructions et de structures de données qui sont intégrées dans du matériel informatique pour que ce dernier puisse fonctionner.

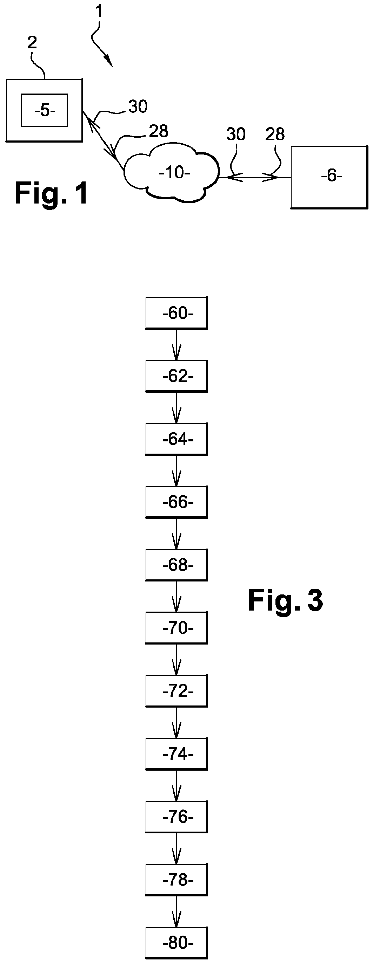

Sur la figure 1 est représenté un système 1 d'identification automatique d'un modèle de véhicule. Sur la figure 1 est également représenté schématiquement un véhicule particulier 2.

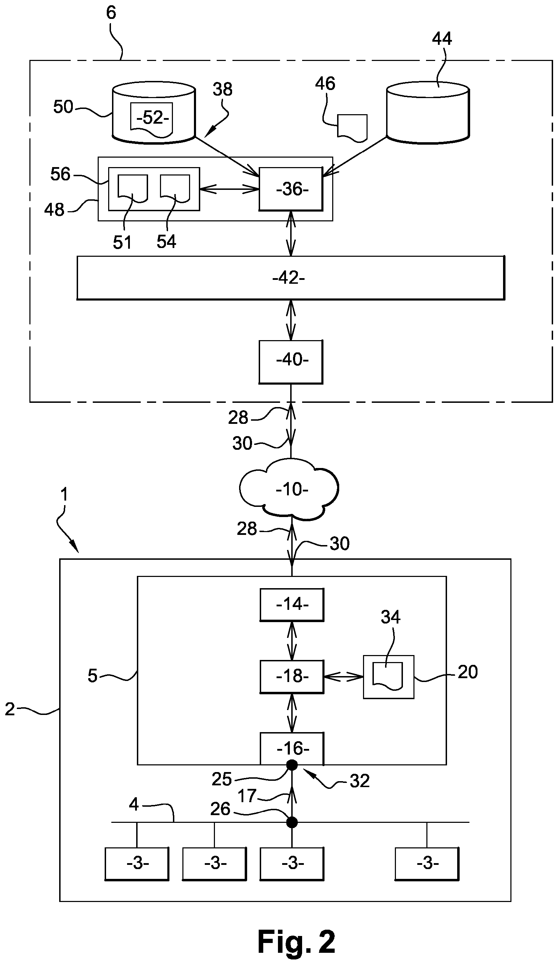

Le véhicule 2 est par exemple un véhicule léger de type automobile, un poids-lourd, un véhicule deux roues, un véhicule autonome, un véhicule volant ou encore un véhicule naviguant, sans que cette liste ne soit exhaustive. Le véhicule 2 comprend plusieurs unités de commande électronique 3, en l'occurrence quatre dans l'exemple illustratif de la figure 2, connectées les unes aux autres via au moins un réseau 4 du véhicule 2. Dans l'exemple de réalisation particulier de la figure 2, le véhicule 2 ne comprend qu'un seul réseau 4 de véhicule. En variante non représentée, le véhicule 2 comprend plusieurs réseaux 4 de véhicule, correspondant à plusieurs types de signaux distincts circulant au sein du véhicule 2. Les unités de commande électronique 3 sont configurées pour contrôler différents sous-systèmes du véhicule 2. Le réseau 4 est typiquement un réseau conforme à un protocole de communication de données de type point-à-point. Le réseau 4 de véhicule est par exemple un bus CAN (de l'anglais Controller Area Network).

En revenant à la figure 1, le système 1 comprend un dispositif électronique 5 et un équipement 6 de traitement de données.

Le dispositif électronique 5 est agencé au sein du véhicule 2 et est relié à au moins un réseau 4 du véhicule 2, pour interfacer et échanger des données avec ce réseau 4, comme représenté sur la figure 2. Le dispositif électronique 5 est relié en outre à l'équipement 6 de traitement de données via un réseau de communication 10. Le dispositif électronique 5 comporte des moyens 14 de communication sur le réseau de communication 10, des moyens 16 d'acquisition de données 17 circulant sur le ou chaque réseau 4 du véhicule 2, et un module 18 de traitement de données. De préférence, comme illustré sur la figure 2, le dispositif électronique 5 comporte en outre une mémoire 20 reliée au module 18 de traitement de données.

Comme illustré sur la figure 2, le dispositif électronique 5 est par exemple une unité autonome sous forme de boîtier télématique muni d'un connecteur 25, relié par voie filaire à un connecteur 26 du véhicule 2. Un tel connecteur 26, relié à au moins un réseau 4 du véhicule 2, est par exemple un connecteur de type OBD (de l'anglais On-Board Diagnostic). En variante, le dispositif électronique 5 peut être intégré à un élément préexistant du véhicule 2 au sein duquel il est agencé, tel qu'un tableau de bord par exemple, et être ainsi relié à au moins un réseau 4 du véhicule 2.

Le réseau de communication 10 est muni d'une infrastructure de communication privée ou étendue permettant la connexion, ou l'accès, à des équipements de communication de type serveurs et/ou bases de données et/ou dispositifs électroniques de communication. De manière classique, l'infrastructure de communication forme un réseau sans fil, ou un réseau comprenant une portion sans fil et une portion filaire. Selon un exemple de réalisation particulier, le réseau de communication 10 est conçu comme un réseau cellulaire de type GPRS (de l'anglais General Packet Radio Service) ou encore UMTS (de l'anglais Universal Mobile Télécommunications System) ou encore comme un réseau local. En variante, le réseau de communication 10 peut être conçu comme un réseau de type Internet, comportant par exemple une portion de réseau conforme à la norme GPRS ou à la norme UMTS.

Les moyens 14 de communication sur le réseau de communication 10 sont aptes à transmettre des messages 28 sur le réseau de communication 10 à destination de l'équipement 6 de traitement de données, notamment des messages 28 de type requêtes comme cela sera détaillé par la suite. De préférence, les moyens de communication 14 sont également aptes à recevoir des messages 30 de l'équipement 6 de traitement de données, via le réseau de communication 10. Les moyens de communication 14 comprennent par exemple un émetteur-récepteur de données sur un réseau de communication cellulaire, tel qu'une antenne.

Les moyens 16 d'acquisition de données 17 comprennent par exemple une interface réseau 32.

L'interface réseau 32 est munie des niveaux électriques et électroniques et des protocoles requis pour interagir avec le ou chaque réseau 4 de véhicule, et en particulier pour récupérer des données 17 circulant sur le ou chaque réseau 4 de véhicule. L'interface réseau 32 se présente par exemple sous la forme d'une antenne sans fil, ou encore, dans l'exemple de réalisation de la figure 2, sous la forme du connecteur 25 destiné à être relié à au moins un réseau 4 de véhicule par voie filaire.

Les données 17 circulant sur le ou chaque réseau 4 du véhicule 2 comprennent des messages et des paramètres d'identification de ces messages. Chaque message contient un ou plusieurs signaux. Chaque signal comprend par exemple des données de mesure de paramètres physiques relatifs au véhicule 2, typiquement des paramètres tels que la vitesse du véhicule, le nombre de tours par minute, ou encore des paramètres indicatifs du débit de données au sein du réseau 4, de l'état des airbags, ou de l'état d'enclenchement des ceintures de sécurité, sans que cette liste ne soit exhaustive. Les messages sont par exemple conformes au protocole CAN (de l'anglais Controller Area Network). Chaque paramètre d'identification d'un message est par exemple formé d'un couple contenant une donnée indicative de la taille en octets du message, associée à un identifiant du message.

Le module 18 de traitement de données est relié aux moyens de communication 14, aux moyens 16 d'acquisition de données 17, et à la mémoire 20. Le module 18 de traitement de données est propre à élaborer une requête 28 de demande d'identification du modèle du véhicule 2. En particulier, le module 18 de traitement de données est propre à élaborer une requête de demande d'identification 28 lors de la première connexion du dispositif électronique 5 au réseau 4 du véhicule 2, comme cela sera détaillé par la suite. La requête 28 comprend au moins un paramètre d'identification d'un message contenu dans des données 17 acquises par les moyens 16 d'acquisition de données. Autrement dit, la requête 28 comprend au moins un paramètre d'identification d'un message circulant sur le ou un des réseau(x) 4 du véhicule 2. Dans un exemple de réalisation particulier de l'invention, la requête 28 comprend en outre au moins un message contenu dans des données 17 acquises par les moyens 16 d'acquisition de données. Le module 18 de traitement de données est par exemple formé d'un processeur.

La mémoire 20 est par exemple une mémoire non volatile reprogrammable, typiquement une mémoire flash. De préférence, la mémoire 20 stocke un micrologiciel 34 qui, lorsqu'il est exécuté par le module 18 de traitement de données, fournit un ensemble de fonctionnalités au dispositif électronique 5 permettant à ce dernier de fonctionner. Par exemple, le micrologiciel 34 est propre, lorsqu'il est mis en oeuvre par le module 18 de traitement de données, à participer à l'élaboration de la requête 28 de demande d'identification du modèle du véhicule 2.

Comme représenté sur la figure 2, l'équipement 6 de traitement de données comprend des moyens 36 de traitement de données et des moyens de mémorisation 38. De préférence, l'équipement 6 de traitement de données comprend en outre des moyens 40 de communication sur le réseau de communication 10, un bus central 42, et un moyen 44 de stockage de tables 46 de configuration de signaux relatifs à des modèles de véhicules. Dans l'exemple de réalisation particulier de la figure 2, l'équipement 6 de traitement de données comprend en outre un serveur 48 et une base de données 50.

De préférence, le serveur 48 expose une interface de programmation 51. L'interface de programmation 51 est par exemple une interface permettant une mise à jour à distance du micrologiciel 34 au sein du dispositif électronique 5. L'interface de programmation 51 est par exemple stockée dans une mémoire 56 du serveur 48. La mémoire 56 est par exemple une mémoire non volatile reprogrammable.

Les moyens 36 de traitement de données sont par exemple formés d'un processeur. Dans l'exemple de réalisation particulier de la figure 2, les moyens 36 de traitement de donnés sont agencés au sein du serveur 48 et forment un processeur de ce serveur 48.

Les moyens de mémorisation 38 sont reliés aux moyens 36 de traitement de données. Les moyens de mémorisation 38 stockent une table 52 de correspondance entre une liste de paramètres d'identification de messages circulant dans des réseaux de véhicules, et une liste de modèles de véhicules associés. Dans la table de correspondance 52, à chaque modèle de véhicule est associé un ou plusieurs échantillons, chaque échantillon étant formé d'un ensemble de paramètres d'identification de messages correspondant à un réseau particulier du véhicule selon ce modèle. Les moyens de mémorisation 38 stockent également une application 54. Dans l'exemple de réalisation particulier de la figure 2, les moyens de mémorisation 38 comprennent la base de données 50, ainsi que la mémoire 56 du serveur 48. La base de données 50 stocke la table de correspondance 52. La mémoire 56 stocke l'application 54.

L'application 54 est propre, lorsqu'elle est mise en oeuvre par les moyens 36 de traitement de données après réception d'une requête 28 de demande d'identification du modèle du véhicule 2, à identifier dans la table de correspondance 52 un modèle de véhicule correspondant. Plus précisément, l'application 54 comporte des instructions de programme aptes à calculer, lorsque l'application 54 est mise en oeuvre par les moyens 36 de traitement de données, pour le ou chaque réseau 4 du véhicule 2, un taux de similarité entre un échantillon formé des paramètres d'identification contenus dans la requête 28 de demande d'identification et correspondant à ce réseau 4, et chaque échantillon de la table de correspondance 52, et à identifier le modèle de véhicule selon le résultat du calcul de taux de similarité.

Ceci permet de réduire avantageusement le nombre de faux positifs lors de l'identification, et d'ainsi améliorer la précision et la fiabilité de l'identification.

De préférence, les instructions de programme de l'application 54 sont aptes à appliquer, pour le ou chaque réseau 4 du véhicule 2, un coefficient de type Sorensen-Dice sur chaque ensemble formé d'un échantillon contenu dans la requête 28 de demande d'identification et correspondant à ce réseau 4, et d'un échantillon de la table de correspondance 52. Le calcul d'un coefficient SD de type Sorensen-Dice sur deux échantillons d'entrée A et B qui se présentent sous la forme d'ensembles finis est donné par la formule mathématique suivante :

$$SD\,(A,B) = \frac{2.\,|A \cap B|}{|A| + |B|}$$

où |A| est le nombre d'éléments de A, et |B| est le nombre d'éléments de B. En l'espèce, selon l'invention, le nombre d'éléments d'un échantillon contenu dans la requête 28 de demande d'identification est le nombre de paramètres d'identification distincts présents dans cet échantillon. De même, le nombre d'éléments d'un échantillon de la table de correspondance 52 est le nombre de paramètres d'identification distincts présents dans cet échantillon.

De préférence encore, dans l'exemple de réalisation particulier selon lequel le véhicule 2 comprend plusieurs réseaux 4 de véhicule, les instructions de programme de l'application 54 sont aptes à calculer, pour chaque modèle de véhicule de la table de correspondance 52, une valeur moyenne entre les différents coefficients de type Sorensen-Dice préalablement calculés pour chaque réseau 4 du véhicule 2.

De préférence encore, dans l'exemple de réalisation particulier selon lequel la requête de demande d'identification 28 comprend en outre au moins un message, les instructions de programme de l'application 54 sont aptes à déterminer, pour chaque modèle de véhicule d'une sous-liste de modèles de véhicule de la table de correspondance 52, un taux de signaux utiles contenus dans les messages du ou de chaque échantillon de la requête 28, comme cela sera détaillé par la suite. Par « signaux utiles » on entend les signaux contenus dans ces messages et figurant dans la table 46 de configuration de signaux associée à ce modèle de véhicule. Plus précisément, les instructions de programme de l'application 54 sont aptes à comparer, pour chaque modèle de véhicule de cette sous-liste et à partir de la table 46 de configuration de signaux associée à ce modèle de véhicule, les signaux contenus dans cette table aux signaux contenus dans les messages du ou de chaque échantillon de la requête 28, et à en déduire le taux de signaux utiles associé à ce modèle de véhicule.

De préférence encore, dans l'exemple de réalisation particulier selon lequel la requête de demande d'identification 28 comprend en outre au moins un message, les instructions de programme de l'application 54 sont aptes à calculer, pour chaque modèle de véhicule d'une sous-liste de modèles de véhicule de la table de correspondance 52, une valeur moyenne entre le taux de similarité calculé, ou la moyenne des taux de similarité calculés le cas échéant, associé(e) à ce modèle, et le taux de signaux utiles associé à ce modèle.

Les moyens 40 de communication sur le réseau de communication 10 sont aptes à recevoir des messages 28 du dispositif électronique 5, via le réseau de communication 10. De préférence, les moyens de communication 40 sont également aptes à transmettre des messages 30 sur le réseau de communication 10 à destination du dispositif électronique 5. Les moyens de communication 40 comprennent par exemple un serveur TCP (de l'anglais Transmission Control Protocol).

Le bus central 42 est relié aux moyens 36 de traitement de données et aux moyens de communication 40. Le bus central 42 est un module de programme intermédiaire apte à assurer la communication entre les composants de l'équipement 6 de traitement de données, via des messages définis formellement. Le bus central 42 permet ainsi de transmettre les messages au sein de l'équipement 6 de traitement de données, selon un mode de transmission asynchrone. La présence d'un bus central 42 améliore l'absorption de pics de charge, tout en permettant de rejouer des messages si nécessaire, et rend ainsi le système plus souple, rapide, robuste et tolérant aux pannes De préférence, le bus central 42 est configuré pour persister de manière éphémère les données qu'il transmet, tant que celles-ci n'ont pas été traitées par un des composants de l'équipement 6 ou par un système tiers. Ceci permet avantageusement d'améliorer la tolérance aux pannes du système.

Le moyen 44 de stockage de tables 46 de configuration de signaux est relié aux moyens 36 de traitement de données. Chaque table de configuration 46 correspond à un modèle de véhicule particulier et permet à un dispositif électronique agencé dans un véhicule de ce modèle et relié à un réseau de ce véhicule de pouvoir configurer l'analyse des signaux circulant au sein de ce réseau, comme cela sera décrit par la suite. Le moyen de stockage 44 est par exemple formé d'une base de données.

Le procédé d'identification du modèle du véhicule 2, mis en oeuvre par le système d'identification 1 de la figure 1, va maintenant être décrit en référence aux figures 2 et 3.

On suppose qu'initialement le dispositif électronique 5 est connecté au réseau 4 du véhicule 2. Dans l'exemple de réalisation particulier de la figure 2, le connecteur 25 du dispositif électronique 5 est pour ce faire relié par voie filaire au connecteur 26 du véhicule 2. En variante non représentée, le véhicule 2 comprend plusieurs réseaux 4 et le dispositif électronique 5 est connecté à chacun des réseaux 4.

Le procédé comporte une étape initiale 60 au cours de laquelle le dispositif électronique 5 acquière des données 17 circulant sur le ou chaque réseau 4 du véhicule 2. Plus précisément, les moyens 16 d'acquisition de données du dispositif électronique 5 acquièrent de telles données 17 circulant sur le ou chaque réseau 4. L'étape initiale 60 peut par exemple être mise en oeuvre lors de la première connexion du dispositif électronique 5 à au moins un réseau 4 du véhicule 2. En variante, l'étape initiale 60 peut être mise en oeuvre suite à une demande de l'interface de programmation 51 au dispositif électronique 5, ou encore suite à une détection du ou d'un des réseau(x) 4 de véhicule par le dispositif électronique 5. A l'issue de cette étape initiale 60, les moyens 16 d'acquisition de données transmettent les données 17 acquises au module 18 de traitement de données.

Au cours d'une étape suivante 62, le dispositif électronique 5 élabore une requête 28 de demande d'identification du modèle du véhicule 2. Plus précisément, le module 18 de traitement de données du dispositif électronique met en oeuvre le micrologiciel 34 et élabore la requête 28 avec le micrologiciel 34. La requête 28 de demande d'identification du modèle du véhicule 2 comprend au moins un paramètre d'identification d'un message appartenant aux données 17 acquises et circulant sur le ou un des réseau(x) 4 du véhicule 2. A l'issue de l'étape 62, le module 18 de traitement de données transmet la requête 28 aux moyens de communication 14.

Au cours d'une étape suivante 64, le dispositif électronique 5 émet, sur le réseau de communication 10 à destination de l'équipement 6 de traitement de données, la requête 28 de demande d'identification du modèle du véhicule 2. Plus précisément, les moyens de communication 14 du dispositif électronique 5 émettent la requête 28 sur le réseau de communication 10 à destination de l'équipement 6 de traitement de données.

Au cours d'une étape suivante 66, l'équipement 6 de traitement de données reçoit la requête 28 de demande d'identification du modèle du véhicule 2. Plus précisément, les moyens de communication 40 de l'équipement 6 de traitement de données reçoivent la requête 28. A l'issue de l'étape 66, les moyens de communication 40 transmettent la requête au bus central 42, qui lui-même la transmet aux moyens 36 de traitement de données.

Au cours d'une étape suivante 68, les moyens 36 de traitement de données de l'équipement 6 de traitement de données mettent en oeuvre l'application 54. Les instructions de programme de l'application 54 calculent alors, pour le ou chaque réseau 4 du véhicule 2, un taux de similarité entre un échantillon formé des paramètres d'identification contenus dans la requête 28 de demande d'identification et correspondant à ce réseau 4, et chaque échantillon de la table de correspondance 52. De préférence, lors de cette étape de calcul 68, les instructions de programme de l'application 54 appliquent, pour le ou chaque réseau 4 du véhicule 2, un coefficient de type Sorensen-Dice sur chaque ensemble formé d'un échantillon contenu dans la requête 28 de demande d'identification et correspondant à ce réseau 4, et d'un échantillon de la table de correspondance 52. Dans l'exemple de réalisation particulier selon lequel le véhicule 2 comprend plusieurs réseaux 4, à l'issue de cette étape de calcul 68, les instructions de programme de l'application 54 calculent, pour chaque modèle de véhicule de la table de correspondance 52, une valeur moyenne entre les différents coefficients de type Sorensen-Dice préalablement calculés pour chaque réseau 4 du véhicule 2.

Selon un exemple de réalisation préférentiel de l'invention, à l'issue de cette étape de calcul 68, une sous-liste ordonnée de modèles de véhicules est obtenue. Les modèles de véhicules de la sous-liste sont des modèles pour lesquels le taux de similarité calculé, ou la moyenne des taux de similarité calculés le cas échéant, est supérieur(e) à un taux prédéterminé.

De préférence encore, dans l'exemple de réalisation particulier selon lequel la requête 28 comprend en outre au moins un message et une sous-liste ordonnée de modèles de véhicules est obtenue à l'issue de l'étape de calcul 68, le procédé comprend une étape suivante 70 au cours de laquelle les moyens 36 de traitement de données de l'équipement 6 de traitement de données mettent en oeuvre l'application 54. Les instructions de programme de l'application 54 déterminent alors, pour chaque modèle de véhicule de la sous-liste ordonnée obtenue à l'issue de l'étape de calcul 68, un taux de signaux utiles contenus dans les messages du ou de chaque échantillon de la requête 28. Plus précisément, les instructions de programme de l'application 54 comparent, pour chaque modèle de véhicule de la sous-liste ordonnée et à partir de la table 46 de configuration de signaux associée à ce modèle de véhicule, les signaux contenus dans cette table aux signaux contenus dans les messages du ou de chaque échantillon de la requête 28, et en déduisent le taux de signaux utiles associé à ce modèle de véhicule.

De préférence encore, dans l'exemple de réalisation particulier selon lequel la requête 28 comprend en outre au moins un message et une sous-liste ordonnée de modèles de véhicules est obtenue à l'issue de l'étape de calcul 68, le procédé comprend une étape suivante 72 au cours de laquelle les moyens 36 de traitement de données de l'équipement 6 de traitement de données mettent en oeuvre l'application 54. Les instructions de programme de l'application 54 calculent alors, pour chaque modèle de véhicule de la sous-liste ordonnée obtenue à l'issue de l'étape de calcul 68, une valeur moyenne entre le taux de similarité calculé, ou la moyenne des taux de similarité calculés le cas échéant, associé(e) à ce modèle, et le taux de signaux utiles associé à ce modèle.

Au cours d'une étape suivante 74, les moyens 36 de traitement de données de l'équipement 6 de traitement de données mettent en oeuvre l'application 54. Les instructions de programme de l'application 54 identifient alors le modèle du véhicule 2 selon le résultat du calcul de taux de similarité effectué à l'étape 68.

Plus précisément, dans un exemple de réalisation particulier selon lequel le procédé ne comprend pas les étapes de détermination et de calcul 70, 72, le modèle de véhicule identifié au cours de l'étape 74 est le modèle associé aux paramètres de la liste de paramètres qui présentent le taux de similarité le plus élevé.

En variante, dans l'exemple de réalisation préférentiel selon lequel le procédé comprend les étapes de détermination et de calcul 70, 72, et selon lequel une sous-liste ordonnée de modèles de véhicules est obtenue à l'issue de l'étape de calcul 68, l'étape 74 d'identification du modèle du véhicule est effectuée sur la base de cette sous-liste ordonnée de modèles de véhicules. Plus précisément, selon cet exemple de réalisation préférentiel, le modèle de véhicule identifié au cours de l'étape 74 est le modèle présentant la valeur moyenne la plus élevée, cette valeur moyenne étant la valeur moyenne calculée au cours de l'étape 72.

De préférence, dans l'exemple de réalisation particulier selon lequel l'équipement 6 de traitement de données comprend un moyen 44 de stockage de tables 46 de configuration de signaux, le procédé comprend une étape suivante 76 au cours de laquelle les moyens 36 de traitement de données de l'équipement 6 téléchargent, depuis le moyen de stockage 44, la table 46 de configuration de signaux correspondant au modèle du véhicule identifié au cours de l'étape d'identification 74.

De préférence encore, dans l'exemple de réalisation particulier selon lequel l'équipement 6 de traitement de données comprend un moyen 44 de stockage de tables 46 de configuration de signaux, le procédé comprend une étape suivante 78 au cours de laquelle l'équipement 6 de traitement de données transmet au dispositif électronique 5 la table 46 de configuration de signaux correspondant au modèle du véhicule identifié au cours de l'étape d'identification 74, via le réseau de communication 10. Plus précisément, les moyens 36 de traitement de données de l'équipement 6 incorporent la table 46 de configuration de signaux correspondant au modèle du véhicule identifié au sein d'un ou plusieurs message(s) 30, puis transmettent ce ou ces message(s) au dispositif électronique 5, via les moyens de communication 40 et le réseau de communication 10..

De préférence encore, dans l'exemple de réalisation particulier selon lequel l'équipement 6 de traitement de données comprend un moyen 44 de stockage de tables 46 de configuration de signaux, le procédé comprend une étape finale 80 au cours de laquelle le dispositif électronique 5 stocke dans sa mémoire 20 la table 46 de configuration de signaux correspondant au modèle du véhicule identifié au cours de l'étape d'identification 74. Le dispositif électronique 5 stocke ainsi dans sa mémoire 20 la table 46 lui permettant de configurer l'analyse des signaux circulant au sein du ou de chaque réseau 4 du véhicule 2.

Le système d'identification automatique d'un modèle de véhicule selon l'invention offre plusieurs avantages :

- le système s'adapte avantageusement à tous les véhicules équipés d'au moins un réseau de véhicule reliant une ou plusieurs unité(s) de commande électronique, autrement dit à un très grand nombre de véhicules du parc existant ;
- le système ne requiert à aucun moment d'intervention de la part d'un utilisateur ;
- grâce au calcul d'un taux de similarité, le système présente une précision d'identification et une fiabilité améliorées.

Dans les revendications, le mot « comprenant » n'exclut pas d'autres éléments.

## Revendications

**1.** Système (1) d'identification automatique d'un modèle de véhicule (2), le véhicule (2) comprenant une ou plusieurs unité(s) de commande électronique (3) connectées les unes aux autres via au moins un réseau (4) du véhicule (2), le système (1) comportant un dispositif électronique (5) et un équipement (6) de traitement de données, le dispositif électronique (5) étant adapté pour être agencé au sein du véhicule (2) et étant propre à être relié à au moins un réseau (4) du véhicule (2),

> • le dispositif électronique (5) étant relié à l'équipement (6) de traitement de données via un réseau de communication (10) et comportant des moyens (14) de communication sur le réseau de communication (10) ; des moyens (16) d'acquisition de données (17) circulant sur le ou chaque réseau (4) du véhicule (2), lesdites données (17) comprenant des messages et des paramètres d'identification de messages ; et un module (18) de traitement de données relié aux moyens de communication (14) et aux moyens (16) d'acquisition de données, le module (18) de traitement de données étant propre à élaborer une requête (28) de demande d'identification du modèle du véhicule (2), la requête (28) comprenant au moins un paramètre d'identification d'un message circulant sur le ou un des réseau(x) (4) du véhicule (2) ;

> **caractérisé en ce que** l'équipement (6) de traitement de données comprend des moyens de mémorisation (38) et des moyens (36) de traitement de données reliés aux moyens de mémorisation (38), les moyens de mémorisation (38) stockant une table de correspondance (52) entre une liste de paramètres d'identification de messages circulant dans des réseaux de véhicules et une liste de modèles de véhicules associés, les moyens de mémorisation (38) stockant en outre une application (54), l'application (54) étant adaptée lorsqu'elle est mise en oeuvre par les moyens (36) de traitement de données après réception d'une requête (28) de demande d'identification du modèle du véhicule (2), à identifier dans la table de correspondance (52) un modèle de véhicule correspondant ; et

dans lequel l'application (54) comporte des instructions de programme aptes à calculer, lorsque l'application (54) est mise en oeuvre par les moyens (36) de traitement de données, pour le ou chaque réseau (4) du véhicule (2), un taux de similarité entre un échantillon formé des paramètres d'identification contenus dans la requête de demande d'identification (28) et correspondant à ce réseau (4), et des échantillons formés chacun d'un ensemble de paramètres de la liste de paramètres de la table de correspondance (52), et à identifier le modèle de véhicule selon le résultat du calcul de taux de similarité.

**2.** Procédé d'identification automatique d'un modèle de véhicule (2), le véhicule (2) comprenant une ou plusieurs unité(s) de commande électronique (3) connectées les unes aux autres via au moins un réseau (4) du véhicule (2), le procédé étant mis en oeuvre par un système d'identification (1) selon la revendication 1, le dispositif électronique (5) étant agencé au sein du véhicule (2) et étant relié à au moins un réseau (4) du véhicule (2), le procédé comprenant les étapes suivantes :

> • l'acquisition (60), par le dispositif électronique (5), de données (17) circulant sur le ou chaque réseau (4) du véhicule (2), lesdites données (17) comprenant des messages et des paramètres d'identification de messages ;
> • l'élaboration (62), par le dispositif électronique (5), d'une requête (28) de demande d'identification du modèle du véhicule (2), la requête (28) comprenant au moins un paramètre d'identification d'un message circulant sur le ou un des réseau(x) (4) du véhicule (2),
> • l'émission (64), par le dispositif électronique (5), sur le réseau de communication (10) à destination de l'équipement (6) de traitement de données, de la requête (28) de demande d'identification du modèle du véhicule (2),
> • la réception (66), par l'équipement (6) de traitement de données, de la requête (28) de demande d'identification du modèle du véhicule (2),

> **caractérisé en ce que** le procédé comprend en outre

• le calcul (68), par l'application (54) de l'équipement (6) de traitement de données, pour le ou chaque réseau (4) du véhicule (2), d'un taux de similarité entre un échantillon formé des paramètres d'identification contenus dans la requête de demande d'identification (28) et correspondant à ce réseau (4), et des échantillons formés chacun d'un ensemble de paramètres de la liste de paramètres de la table de correspondance (52),

• l'identification (74), par l'application (54) de l'équipement (6) de traitement de données dans la table de correspondance (52), du modèle du véhicule, selon le résultat du calcul de taux de similarité.

**3.** Procédé selon la revendication 2, dans lequel, lors de l'étape (68) de calcul d'un taux de similarité, l'application (54) applique, pour le ou chaque réseau (4) du véhicule (2), un coefficient de type Sorensen-Dice sur chaque ensemble formé d'un échantillon contenu dans la requête (28) de demande d'identification et correspondant à ce réseau (4), et d'un échantillon de la table de correspondance (52).

**4.** Procédé selon la revendication 2 ou 3, dans lequel l'équipement (6) de traitement de données comprend en outre un moyen (44) de stockage de tables (46) de configuration de signaux relatifs à des modèles de véhicules, chaque table de configuration (46) correspondant à un modèle de véhicule particulier, et dans lequel le procédé comprend en outre une étape (76) de téléchargement, par les moyens (36) de traitement de données de l'équipement (6) de traitement de données, depuis le moyen de stockage (44), de la table (46) de configuration de signaux correspondant au modèle du véhicule identifié.

**5.** Procédé selon l'une des revendications 2 à 4, dans lequel, à l'issue de l'étape (68) de calcul d'un taux de similarité, une sous-liste ordonnée de modèles de véhicules est obtenue, les modèles de véhicules de la sous-liste étant des modèles pour lesquels le taux de similarité calculé est supérieur à un taux prédéterminé, l'étape (74) d'identification du modèle du véhicule étant effectuée sur la base de ladite sous-liste ordonnée de modèles de véhicules.

**6.** Procédé selon les revendications 4 et 5 considérées ensemble, dans lequel la requête (28) de demande d'identification du modèle du véhicule comprend en outre au moins un message circulant sur le ou un des réseau(x) (4) du véhicule (2), et dans lequel le procédé comprend en outre une étape (70) de détermination, par l'application (54) de l'équipement (6) de traitement de données, pour chaque modèle de véhicule de la sous-liste ordonnée de modèles de véhicules, d'un taux de signaux utiles contenus dans les messages du ou de chaque échantillon de la requête de demande d'identification (28), ledit taux de signaux utiles étant déterminé à partir de la table (46) de configuration de signaux associée à ce modèle de véhicule, les signaux utiles étant les signaux contenus dans lesdits messages et figurant dans ladite table (46) de configuration de signaux ; et une étape (72) de calcul, par l'application (54) de l'équipement (6) de traitement de données, pour chaque modèle de véhicule de la sous-liste ordonnée de modèles de véhicules, d'une valeur moyenne entre le taux de similarité calculé, associé à ce modèle de véhicule, et le taux de signaux utiles associé à ce modèle de véhicule.

**7.** Procédé selon la revendication 6, dans lequel, lors de l'étape (74) d'identification du modèle du véhicule, le modèle identifié est le modèle présentant la valeur moyenne la plus élevée.

**8.** Procédé selon la revendication 4, 6 ou 7 ou selon la revendication 5 lorsqu'elle dépend de la revendication 4, comprenant en outre une étape (78) de transmission au dispositif électronique (5), par l'équipement (6) de traitement de données sur le réseau de communication (10), de ladite table (46) de configuration de signaux correspondant au modèle du véhicule identifié, et une étape (80) de stockage de ladite table (46), par le dispositif électronique (5) dans une mémoire (20) du dispositif (5).

**9.** Procédé selon l'une des revendications 2 à 4, dans lequel, lors de l'étape (74) d'identification du modèle du véhicule, le modèle identifié est le modèle associé aux paramètres de la liste de paramètres qui présentent le taux de similarité le plus élevé.

**10.** Produit programme d'ordinateur (54) téléchargeable depuis un réseau de communication (10) et/ou enregistré dans une mémoire (56) d'un équipement (6) de traitement de données, ledit produit programme d'ordinateur (54) comprenant des instructions de programme formant l'application du système d'identification (1) selon la revendication 1, lesdites instructions de programme étant adaptées pour mettre en oeuvre les étapes (68, 74) de calcul et d'identification du procédé selon l'une des revendications 2 à 9 lorsque le produit programme (54) est exécuté dans l'équipement (6) de traitement de données du système d'identification (1).

**Patentansprüche**

**1.** System (1) zur automatischen Identifizierung eines Fahrzeugmodells (2), wobei das Fahrzeug (2) eine oder mehrere elektronische Steuereinheit(en) (3) umfasst, die miteinander über mindestens ein Netzwerk (4) des Fahrzeugs (2) verbunden sind, wobei das System (1) eine elektronische Vorrichtung (5) und eine Ausrüstung (6) zur Verarbeitung von Daten umfasst, wobei die elektronische Vorrichtung (5) angepasst ist, um innerhalb des Fahrzeugs (2) angeordnet zu sein, und geeignet ist, um mit mindestens einem Netzwerk (4) des Fahrzeugs (2) verbunden zu sein,

- wobei die elektronische Vorrichtung (5) mit der Ausrüstung (6) zur Verarbeitung von Daten über ein Kommunikationsnetzwerk (10) verbunden ist und Mittel (14) zur Kommunikation im Kommunikationsnetzwerk (10) umfasst; wobei Mittel (16) zur Erfassung von Daten (17) in dem oder jedem Netzwerk (4) des Fahrzeugs (2) zirkulieren, wobei die Daten (17) Meldungen und Parameter zu Identifizierung von Meldungen umfassen; und ein Modul (18) zur Verarbeitung von Daten, das mit den Mitteln zur Kommunikation (14) und den Mitteln (16) zur Erfassung von Daten verbunden ist, wobei das Modul (18) zur Verarbeitung von Daten geeignet ist, eine Abfrage (28) zur Anforderung der Identifizierung des Fahrzeugmodells (2) zu erstellen, wobei die Abfrage (28) mindestens einen Parameter zur Identifizierung einer Meldung umfasst, die in dem oder den Netzwerk(en) (4) des Fahrzeugs (2) zirkuliert;

**dadurch gekennzeichnet, dass** die Ausrüstung (6) zur Verarbeitung von Daten Mittel zur Speicherung (38) und Mittel (36) zur Verarbeitung von Daten umfasst, die mit den Mitteln zur Speicherung (38) verbunden sind, wobei die Mittel zur Speicherung (38) eine Korrespondenztabelle (52) zwischen einer Liste von Parametern zur Identifizierung von Meldungen, die in den Netzwerken von Fahrzeugen zirkulieren, und einer Liste von Modellen von assoziierten Fahrzeugen abspeichern, wobei die Mittel zur Speicherung (38) außerdem eine Anwendung (54) abspeichern, wobei die Anwendung (54) angepasst ist, wenn sie von den Mitteln (36) zur Verarbeitung von Daten nach dem Empfang einer Abfrage (28) zur Anforderung der Identifizierung des Fahrzeugmodells (2) durchgeführt wird, in der Korrespondenztabelle (52) ein entsprechendes Fahrzeugmodell zu identifizieren; und wobei die Anwendung (54) Programmanweisungen umfasst, die ausgelegt sind, um, wenn die Anwendung (54) durch die Mittel (36) zur Verarbeitung von Daten durchgeführt wird, für das oder jedes Netzwerk (4) des Fahrzeugs (2) einen Grad der Ähnlichkeit zwischen einer Stichprobe, gebildet von Parametern zur Identifizierung, enthalten in der Abfrage zur Anforderung der Identifizierung (28), und entsprechend diesem Netzwerk (4), und Stichproben zu berechnen, die jeweils aus einer Einheit von Parametern der Liste von Parametern der Korrespondenztabelle (52) gebildet sind, und das Fahrzeugmodell gemäß dem Ergebnis der Berechnung des Grads der Ähnlichkeit zu identifizieren.

2.   Verfahren zur automatischen Identifizierung eines Fahrzeugmodells (2), wobei das Fahrzeug (2) eine oder mehrere elektronische Steuereinheit(en) (3) umfasst, die miteinander über mindestens ein Netzwerk (4) des Fahrzeugs (2) verbunden sind, wobei das Verfahren durch ein System zur Identifizierung (1) nach Anspruch 1 durchgeführt wird, wobei die elektronische Vorrichtung (5) innerhalb des Fahrzeugs (2) angeordnet ist und mit mindestens einem Netzwerk (4) des Fahrzeugs (2) verbunden ist, wobei das Verfahren die folgenden Schritte umfasst:

- Erfassen (60), durch die elektronische Vorrichtung (5), von Daten (17), die in dem oder jedem Netzwerk (4) des Fahrzeugs (2) zirkulieren, wobei die Daten (17) Meldungen und Parameter zur Identifizierung von Meldungen umfassen;
- Erstellen (62), durch die elektronische Vorrichtung (5), einer Abfrage (28) zur Anforderung der Identifizierung des Fahrzeugmodells (2), wobei die Abfrage (28) mindestens einen Parameter zur Identifizierung einer Meldung umfasst, die in dem oder den Netzwerk(en) (4) des Fahrzeugs (2) zirkuliert,
- Ausgeben (64), durch die elektronische Vorrichtung (5), in dem Kommunikationsnetzwerk (10) hin zur Ausrüstung (6) zur Verarbeitung von Daten, der Abfrage (28) zur Anforderung der Identifizierung des Fahrzeugmodells (2),
- Empfangen (66), durch die Ausrüstung (6) zur Verarbeitung von Daten, der Abfrage (28) zur Anforderung der Identifizierung des Fahrzeugmodells (2),

**dadurch gekennzeichnet, dass** das Verfahren außerdem Folgendes umfasst

- Berechnen (68), durch die Anwendung (54) der Ausrüstung (6) zur Verarbeitung von Daten, für das oder die Netzwerk(e) (4) des Fahrzeugs (2), eines Grads der Ähnlichkeit zwischen einer Stichprobe, gebildet von Parametern zur Identifizierung, enthalten in der Abfrage zur Anforderung der Identifizierung (28) und entsprechend diesem Netzwerk (4), und Stichproben, gebildet jeweils aus einer Einheit von Parametern der Liste von Parametern der Korrespondenztabelle (52),
- Identifizieren (74), durch die Anwendung (54) der Ausrüstung (6) zur Verarbeitung von Daten, in der Korrespondenztabelle (52), des Fahrzeugmodells gemäß dem Ergebnis der Berechnung des Grads der Ähnlichkeit.

**3.** Verfahren nach Anspruch 2, wobei, beim Schritt (68) des Berechnens eines Grads der Ähnlichkeit, die Anwendung (54) für jedes Netzwerk (4) des Fahrzeugs (2) einen Koeffizienten vom Typ Sorensen-Dice auf jede Einheit anwendet, gebildet aus einer Stichprobe, enthalten in der Abfrage (28) zur Anforderung der Identifizierung und entsprechend diesem Netzwerk (4), und einer Stichprobe der Korrespondenztabelle (52).

**4.** Verfahren nach Anspruch 2 oder 3, wobei die Ausrüstung (6) zur Verarbeitung von Daten außerdem ein Mittel (44) zum Abspeichern von Tabellen (46) zur Konfiguration von Signalen mit Bezug auf Fahrzeugmodelle umfasst, wobei jede Tabelle zur Konfiguration (46) einem bestimmten Fahrzeugmodell entspricht, und wobei das Verfahren außerdem einen Schritt (76) des Herunterladens, durch die Mittel (36) zur Verarbeitung von Daten der Ausrüstung (6) zur Verarbeitung, von Daten vom Mittel zum Abspeichern (44) der Tabelle (46) zur Konfiguration von Signalen umfasst, die dem identifizierten Fahrzeugmodell entsprechen.

**5.** Verfahren nach einem der Ansprüche 2 bis 4, wobei am Ausgang des Schritts (68) des Berechnens eines Grads der Ähnlichkeit eine geordnete Unterliste von Fahrzeugmodellen erhalten wird, wobei die Fahrzeugmodelle der Unterliste Modelle sind, für die der berechnete Grad der Ähnlichkeit größer als ein vorbestimmter Grad ist, wobei der Schritt (74) des Identifizierens des Fahrzeugmodells auf der Grundlage der geordneten Unterliste von Fahrzeugmodellen durchgeführt wird.

**6.** Verfahren nach Anspruch 4 und 5 zusammen, wobei die Abfrage (28) zur Anforderung der Identifizierung des Fahrzeugmodells außerdem mindestens eine Meldung umfasst, die in dem oder den Netzwerk(en) (4) des Fahrzeugs (2) zirkuliert, und wobei das Verfahren außerdem einen Schritt (70) des Bestimmens, durch die Anwendung (54) der Ausrüstung (6) zur Verarbeitung von Daten, für jedes Fahrzeugmodell der geordneten Unterliste von Fahrzeugmodellen, eines Grads von nützlichen Signalen umfasst, die in den Meldungen der oder jeder Stichprobe der Abfrage zur Anforderung der Identifizierung (28) enthalten sind, wobei der Grad von nützlichen Signalen auf der Grundlage der Tabelle (46) zur Konfiguration von Signalen bestimmt wird, die mit diesem Fahrzeugmodell assoziiert sind, wobei die nützlichen Signale die Signale sind, die in den Meldungen enthalten sind und in der Tabelle (46) zur Konfiguration von Signalen aufgeführt sind; und einen Schritt (72) des Berechnens, durch die Anwendung (54) der Ausrüstung (6) zur Verarbeitung von Daten, für jedes Fahrzeugmodell der geordneten Unterliste von Fahrzeugmodellen, eines Mittelwerts zwischen dem berechneten Grad der Ähnlichkeit, der mit diesem Fahrzeugmodell assoziiert ist, und dem Grad von nützlichen Signalen, der mit diesem Fahrzeugmodell assoziiert ist.

**7.** Verfahren nach Anspruch 6, wobei beim Schritt (74) des Identifizierens des Fahrzeugmodells das identifizierte Modell das Modell ist, das den höchsten mittleren Wert darstellt.

**8.** Verfahren nach Anspruch 4, 6 oder 7 oder nach Anspruch 5, wenn er von Anspruch 4 abhängt, umfassend außerdem einen Schritt (78) des Übertragens an die elektronische Vorrichtung (5) durch die Ausrüstung (6) zur Verarbeitung von Daten im Kommunikationsnetzwerk (10) der Tabelle (46) zur Konfiguration von Signalen, die dem identifizierten Fahrzeugmodell entsprechen, und einen Schritt (80) des Abspeicherns der Tabelle (46) durch die elektronische Vorrichtung (5) in einem Speicher (20) der Vorrichtung (5).

**9.** Verfahren nach einem der Ansprüche 2 bis 4, wobei beim Schritt (74) des Identifizierens des Fahrzeugmodells das identifizierte Modell das Modell ist, das mit den Parametern der Liste von Parametern assoziiert ist, die den höchsten Grad der Ähnlichkeit darstellen.

**10.** Computerprogrammprodukt (54), das von einem Kommunikationsnetzwerk (10) heruntergeladen werden kann und/oder in einem Speicher (56) einer Ausrüstung (6) zur Verarbeitung von Daten registriert ist, wobei das Computerprogrammprodukt (54) Programmanweisungen umfasst, die die Anwendung des Systems zur Identifizierung (1) nach Anspruch 1 bilden, wobei die Programmanweisungen ausgelegt sind, um die Schritte (68, 74) des Berechnens und des Identifizierens des Verfahrens nach einem der Ansprüche 2 bis 9 durchzuführen, wenn das Programmprodukt (54) in der Ausrüstung (6) zur Verarbeitung von Daten des Systems zur Identifizierung (1) durchgeführt wird.

**Claims**

**1.** System (1) for automatically identifying a vehicle (2) model, the vehicle (2) comprising one or more electronic control unit(s) (3) connected to one another via at least one network (4) of the vehicle (2), the system (1) comprising an electronic device (5) and a piece of data processing equipment (6), the electronic device (5) being adapted to be arranged within the vehicle (2) and being specific to being connect to at least one network (4) of the vehicle (2),

- the electronic device (5) being connected to the data processing equipment (6) via a communication network (10) and comprising means (14) for communicating over the communication network (10); the means (16) for acquiring data (17) circulating over the or each network (4) of the vehicle (2), said data (17) comprising messages and parameters for identifying data (17); and a module (18) for processing data connected to the communication means (14) and the means (16) for acquiring data, the data processing module (18) being specific to developing a request (28) requesting the identification of the vehicle (2) model, the request (28) comprising at least one parameter for identifying a message circulating over the or one of the network(s) (4) of the vehicle (2);

**characterised in that** the data processing equipment (6) comprises memorisation means (38), the memorisation means (38) storing a correspondence table (52) between a list of parameters for identifying messages circulating in the vehicle networks and a list of associated vehicle models, the memorisation means (38) further storing an application (54), the application (54) being adapted when it is implemented by the data processing means (36) after receipt of a request (28) requesting identification of the vehicle (2) model, to identify in the correspondence table (52), a corresponding vehicle model; and wherein the application (54) comprises program instructions capable of calculating, when the application (54) is implemented by the data processing means (36), for the or each network (4) of the vehicle (2), a similarity ratio between a sample formed from the identification parameters contained in the request requesting identification (28) and corresponding to this network (4), and the samples each formed from a set of parameters of the list of parameters of the correspondence table (52), and to identify the vehicle model according to the result of the similarity ratio calculation.

2. Method for automatically identifying a vehicle (2) model, the vehicle (2) comprising one or more electronic control unit(s) (3) connected to one another via at least one network (4) of the vehicle (2), the method being implemented by an identification system (1) according to claim 1, the electronic device (5) being arranged within the vehicle (2) and being connected to at least one network (4) of the vehicle (2), the method comprising the following steps:

   - the acquisition (60), by the electronic device (5), of data (17) circulating over the or each network (4) of the vehicle (2), said data (17) comprising messages and parameters for identifying messages;

   - the development (62), by the electronic device (5), of a request (28) requesting identification of the vehicle (2) model, the request (28) comprising at least one parameter for identifying a message circulating over the or one of the networks (4) of the vehicle (2),
   - the sending (64), by the electronic device (5), over the communication network (10) to the data processing equipment (6), of the request (28) requesting identification of the vehicle (2) model,
   - the receipt (66), by the data processing equipment (6), of the request (28) requesting identification of the vehicle (2) model,

   **characterised in that** the method further comprises

   - the calculation (68), by application (54) of the data processing equipment (6), for the or each network (4) of the vehicle (2), of a similarity ratio between a sample formed from the identification parameters contained in the request requesting identification (28) and corresponding to this network (4), and the samples each formed from a set of parameters of the list of parameters of the correspondence table (52),
   - the identification (74), by application (54) of the data processing equipment (6) in the correspondence table (52), of the vehicle model, according to the result of the similarity ratio calculation.

3. Method according to claim 2, wherein, during the step (68) of calculating a similarity ratio, the application (54) applies, for the or each network (4) of the vehicle (2), a Sorensen-Dice type coefficient on each set formed from a sample contained in the request (28) requesting identification and corresponding to this network (4), and a sample from the correspondence table (52).

4. Method according to claim 2 or 3, wherein the data processing equipment (6) further comprises a means (44) for storing signal configuration tables (46) relating to vehicle models, each configuration table (46) corresponding to a specific vehicle model, and wherein the method further comprises a downloading step (76), by the data processing means (36) of the data processing equipment (6), from the storage means (44), of the signal configuration table (46) corresponding to the identified vehicle model.

5. Method according to one of claims 2 to 4, wherein, from the similarity ratio calculation step (68), an ordered sub-list of vehicle models is obtained, the vehicle models of the sub-list being models for which the calculated similarity ratio is greater than a predetermined ratio, the step (74) for identifying the vehicle model being carried out based on said ordered sub-list of vehicle models.

6. Method according to claims 4 and 5 considered together, wherein the request (28) requesting identification of the vehicle model further comprises at least one message circulating over the or one of the networks (4) of the vehicle (2), and wherein the method further comprises a step (70) for determining, by application (54) of the data processing equipment (6), for each vehicle model of the ordered sub-list of vehicle models, a ratio of useful signals contained in the messages of the or of each sample of the request requesting identification (28), said ratio of useful signals being determined from the signal configuration table (46) associated with this vehicle model, the useful signals being the signals contained in said messages and appearing in said signal configuration table (46); and a step (72) for calculating, by application (54) of the data processing equipment (6), for each vehicle model of the ordered sub-list of vehicle models, an average value between the calculated similarity ratio, associated with this vehicle model, and the ratio of useful signals associated with this vehicle model.

7. Method according to claim 6, wherein, during the step (74) for identifying the vehicle model, the identified model is the model having the highest average value.

8. Method according to claim 4, 6 or 7 or according to claim 5 when it depends on claim 4, further comprising a step (78) for transmitting to the electronic device (5), by the data processing equipment (6) over the communication network (10), of said signal configuration table (46) corresponding to the identified vehicle model, and a step (80) for storing said table (46), by the electronic device (5) in a memory (20) of the device (5).

9. Method according to one of claims 2 to 4, wherein, during the step (74) for identifying the vehicle model, the identified model is the model associated with the parameters of the list of parameters which have the highest similarity ratio.

10. Computer program product (54) downloadable from a communication network (10) and/or recorded in a memory (56) of a piece of data processing equipment (6), said computer program product (54) comprising program instructions forming the application of the identification system (1) according to claim 1, said program instructions being adapted to implement the steps (68, 74) for calculating and identifying the method according to one of claims 2 to 9 when the program product (54) is executed in the data processing equipment (6) of the identification system (1).

**Fig. 1**

**Fig. 3**

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013063232 A